# EUROPEAN PATENT SPECIFICATION

(11) **EP 3 200 405 B1**
(45) Date of publication and mention of the grant of the patent: **01.01.2020**
(21) Application number: 15845105.4
(22) Date of filing: 17.04.2015
(51) Int. Cl.: H04L 12/741, H04L 12/773

(54) **LAYER-3-FORWARDING DEVICE ROUTE TABLE CAPACITY EXPANSION METHOD AND FORWARDING DEVICE**
VERFAHREN ZUR ERWEITERUNG DER TABELLENKAPAZITÄT EINER SCHICHT-3 WEITERLEITUNGSVORRICHTUNG UND WEITERLEITUNGSVORRICHTUNG
PROCÉDÉ D'EXTENSION DE CAPACITÉ DE TABLE DE ROUTAGE DE DISPOSITIF DE TRANSFERT DE COUCHE 3 ET UN DISPOSITIF DE TRANSFERT

(30) Priority: 23.09.2014 CN 201410490502
(43) Date of publication of application: 02.08.2017
(73) Proprietor: ZTE Corporation, Shenzhen, Guangdong 518057 (CN)
(72) Inventor: JIAN, Fujian, Shenzhen Guangdong 518057 (CN)
(74) Representative: Novagraaf Technologies
(86) International application number: PCT/CN2015/076921
(87) International publication number: WO 2016/045368

(56) References cited:
- CN-A- 101 841 483
- CN-A- 101 883 055
- CN-A- 102 868 775
- US-A1- 2003 023 581
- US-A1- 2006 013 145
- US-A1- 2011 002 335
- US-A1- 2011 222 539
- Cisco: "Cisco Nexus 3000 Series Switches: Understand, Configure and Tune the Forwarding Table What You Will Learn Cisco Nexus 3000 Series Switches Forwarding Table Structure", , 21 February 2014 (2014-02-21), XP055411487, Retrieved from the Internet: URL:https://www.cisco.com/c/en/us/products /collateral/switches/nexus-3000-series-swi tches/white_paper_c11-713535.html [retrieved on 2017-09-29]
- KASNAVI ET AL: "A cache-based internet protocol address lookup architecture", COMPUTER NETWORKS, ELSEVIER, AMSTERDAM, NL, vol. 52, no. 2, 5 December 2007 (2007-12-05), pages 303-326, XP022376535, ISSN: 1389-1286

## Description

### Technical Field

The disclosure relates to the technical field of communications, and in particular to a method for expanding a route table capacity of a layer-3 forwarding device, and a forwarding device

### Background

A route table is a table stored on a network device such as a router or a layer-3 switch and the like. The table stores a path reaching a specific network terminal. Route forwarding of an Internet Protocol (IP) message refers to: acquiring next-hop export information by searching the route table via a table-searching operation according to a destination address carried in the IP message, and therefore a capacity of the route table directly determines a network scale capable of being supported by a switch device. Along with a rapid development of a metropolitan area network, bandwidths accessing and gathering in the network device are larger and larger, and meanwhile, an operator requires more and more users to access a device. An access device (Digital Subscriber Line Access Multiplexer (DSLAM), a Passive Optical Network (PON), a metropolitan area network switch and the like) needs to perform data convergence and L3 forwarding by using a switch chip.

With an increasing of access users, it is more difficult for a capacity of an existing switch chip route table to meet above-mentioned demand. Therefore, on a premise of meeting performance requirement, improvement of the capacity of the route table becomes a problem urgently needing to be solved. There are two methods generally at present. First, resources of the switch chip are re-planned and integrated, and resources of the switch chip are used to the greatest extent. Second, hardware is updated, and a switch chip having a larger route table capacity is used. However, re-planning of chip resources will inevitably cause restrictions to usage of some other functions, and such improvement will be limited. Update of the switch chip is limited by two conditions: the first one, whether a chip manufacturer can provide such product in time; and the second one, a cost of a chip will be very high.

Documents US 20030023581A1, US 20110222539A1, Cisco: "Cisco Nexus 3000 Series Switches: Understand, Configure and Tune the Forwarding Table What You Will Learn Cisco Nexus 3000 Series Switches Forwarding Table Structure" and KASNAVI ET AL: "A cache-based internet protocol address lookup architecture" provide related technical solutions; however, the above mentioned problem still remains unsolved.

### Summary

The invention is defined by the independent claims. The dependent claims define advantageous embodiments.

The embodiments of the disclosure are intended to solve a technical problem about provision of a method for expanding a route table capacity of a layer-3 forwarding device, and a forwarding device, so as to solve the problem in the related art that a route table capacity is too small.

In order to solve the above-mentioned technical problem, an embodiment of the disclosure provides a method for expanding a route table capacity of a layer-3 forwarding device, the layer-3 forwarding device including a Central Processing Unit (CPU), a switch chip and an expansion operation element, the method including: obtaining, by the CPU, route information, which includes a destination Internet Protocol (IP) address of a route and layer-2 forwarding information corresponding to the destination IP address; and generating, by the CPU, route table entries according to the route information, saving, by the CPU, a first part of the generated route table entries in the expansion operation element, and saving, by the CPU, route table entries other than the first part of the generated route table entries in the switch chip.

In an example embodiment, generating, by the CPU, the route table entries according to the route information, saving, by the CPU, the first part of the generated route table entries in the expansion operation element and saving, by the CPU, route table entries other than the first part of the generated route table entries in the switch chip includes: determining, by the CPU, whether a route type of the route information is a host route, to obtain a first determination result; and when the first determination result indicates that the route type of the route information is the host route, generating, by the CPU, a first host route table entry according to the route information, and saving, by the CPU, the first host route table entry in the expansion operation element.

In an example embodiment, generating, by the CPU, the route table entries according to the route information, saving, by the CPU, the first part of the generated route table entries in the expansion operation element and saving, by the CPU, route table entries other than the first part of the generated route table entries in the switch chip further includes:
after host route table entries stored in the expansion operation element reaches a first threshold, generating, by the CPU, a second host route table entry according to recently-obtained route information indicating that the route type is the host route, and saving, by the CPU, the second host route table entry in the switch chip.

In an example embodiment, generating, by the CPU, route table entries according to the route information, saving, by the CPU, a first part of the generated route table entries in the expansion operation element and saving, by the CPU, route table entries other than the first part of the generated route table entries in the switch chip further includes: when the first determination result indicates that the route type of the route information is not the host route, determining, by the CPU, whether a prefix type of the route information is consistent with a preset prefix type, to obtain a second determination result; and when the second determination result indicates that the prefix type of the route information is consistent with the preset prefix type, generating, by the CPU, a third route table entry according to the route information, and saving, by the CPU, the third route table entry in the expansion operation element.

In an example embodiment, generating, by the CPU, route table entries according to the route information, saving, by the CPU, a first part of the generated route table entries in the expansion operation element and saving, by the CPU, route table entries other than the first part of the generated route table entries in the switch chip further includes: when the second determination result indicates that the prefix type of the route information is inconsistent with the preset prefix type, generating, by the CPU, a fourth route table entry according to the route information, and saving, by the CPU, the fourth route table entry in the switch chip.

In an example embodiment, the method further includes: receiving, by the switch chip, an IP message; sending, by the switch chip, the IP message to the expansion operation element; determining, by the expansion operation element, whether the IP message needs to be reported to the CPU for processing, to obtain a third determination result; and when the third determination result indicates that the IP message needs to be reported to the CPU for processing, sending, by the expansion operation element, the IP message, via the switch chip, to the CPU for processing.

In an example embodiment, the method further includes: when the third determination result indicates that the IP message does not need to be sent to the CPU for processing, matching, by the expansion operation element, a route table entry in the expansion operation element according to a destination IP address of the IP message, modifying a layer-2 message header of the IP message according to layer-2 forwarding information of a successfully-matched route table entry, and then sending the IP message to the switch chip for forwarding.

In an example embodiment, when the IP message does not match the route table entry in the expansion operation element, the method further includes: forwarding, by the expansion operation element, the IP message to the switch chip, and searching, by the switch chip, the route table entry in the switch chip according to the destination IP address of the IP message for forwarding processing.

The embodiments of the disclosure also provide a forwarding device, which may include: the CPU is arranged to: obtain route information, which includes a destination Internet Protocol (IP) address of a route and layer-2 forwarding information corresponding to the destination IP address; and generate route table entries according to the route information, save a first part of the generated route table entries in the expansion operation element, and save route table entries other than the first part of the generated route table entries in the switch chip.

In an example embodiment, the CPU includes: a first determination component, arranged to determine whether a route type of the route information is a host route, to obtain a first determination result; and a first generation and saving component, arranged to generate, when the first determination result indicates that the route type of the route information is the host route, a first host route table entry according to the route information, and save the first host route table entry in the expansion operation element.

In an example embodiment, the CPU further includes: a second generation and saving component, arranged to generate, after host route table entries stored in the expansion operation element reaches a first threshold, a second host route table entry according to recently-obtained route information indicating that the route type is the host route, and save the second host route table entry in the switch chip.

In an example embodiment, the CPU includes: a second determination component, arranged to determine, when the first determination result indicates that the route type of the route information is not the host route, whether a prefix type of the route information is consistent with a preset prefix type, to obtain a second determination result; and a third generation and saving component, arranged to generate, when the second determination result indicates that the prefix type of the route information is consistent with the preset prefix type, a third route table entry according to the route information, and save the third route table entry in the expansion operation element.

In an example embodiment, the CPU includes: a fourth generation and saving component, arranged to generate, when the second determination result indicates that the prefix type of the route information is inconsistent with the preset prefix type, a fourth route table entry according to the route information, and save the fourth route table entry in the switch chip.

In an example embodiment, the switch chip is arranged to receive an IP message, and send the IP message to the expansion operation element; and the expansion operation element is arranged to determine whether the IP message needs to be reported to the CPU for processing, to obtain a third determination result, and send, when the third determination result indicates that the IP message needs to be reported to the CPU for processing, the IP message, via the switch chip, to the CPU for processing.

In an example embodiment, the expansion operation element is arranged to match, when the third determination result indicates that the IP message does not need to be sent to the CPU for processing, a route table entry saved in the expansion operation element according to a destination IP address of the IP message, modify a layer-2 message header of the IP message according to layer-2 forwarding information of a successfully-matched route table entry, and then send the IP message to the switch chip for forwarding.

In an example embodiment, the switch chip is further arranged to receive, when the IP message does not match the route table entry saved in the expansion operation element, the IP message forwarded by the expansion operation element, and search the route table entry saved in the switch chip according to the destination IP address of the IP message for forwarding processing.

The above-mentioned technical solution in the embodiments of the disclosure has the following beneficial effects. In the above-mentioned solution, the method for expanding a route table capacity of a layer-3 forwarding device saves the route information in the expansion operation element and the switch chip, thus greatly improving route table capacity of a network device and reducing an expansion cost of the route table, and the method has great flexibility and expandability, and can greatly improve user satisfaction.

### Brief Description of the Drawings

Fig. 1 is a step schematic diagram of a method according to an embodiment of the disclosure;
Fig. 2 is a partial structural schematic diagram of a forwarding device according to an embodiment of the disclosure;
Fig. 3 is a step schematic diagram of a specific real-time interaction flow of a method in practical application according to an embodiment of the disclosure; and
Fig. 4 is a partial structural schematic diagram of a forwarding device adopting a Field Programmable Gate Array (FPGA) according to an embodiment of the disclosure.

### Detailed Description of the Embodiments

In order to make the to-be-solved technical problems, technical solutions and advantages of the embodiments of the disclosure clearer, detailed descriptions will be made below with the drawings and specific embodiments.

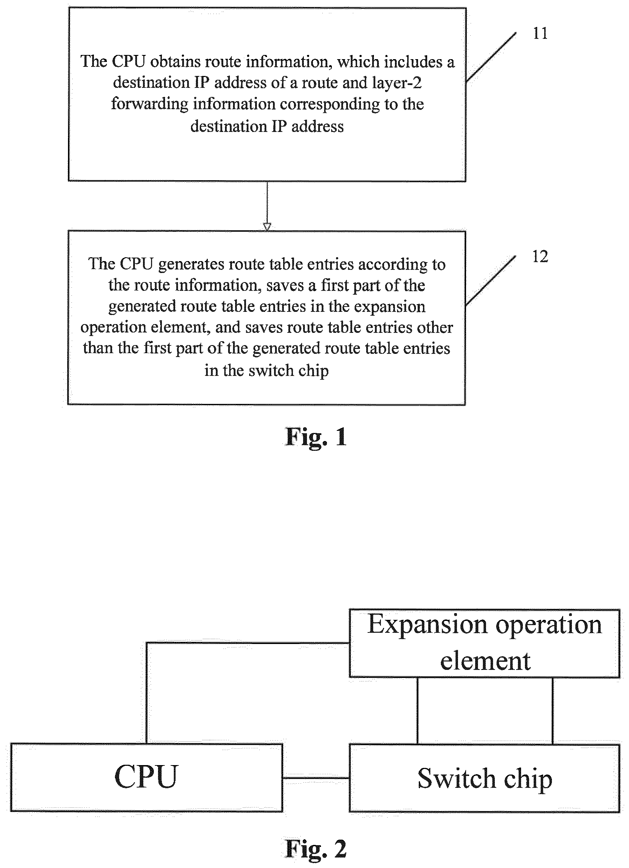

As for the problem in the related art that a route table capacity is too small, the embodiments of the disclosure provide a method for expanding a route table capacity of a layer-3 forwarding device, and a forwarding device. The layer-3 forwarding device includes a CPU, a switch chip and an expansion operation element. As shown in Fig. 1, the method includes the following steps.

Step 11: the CPU obtains route information, which includes a destination IP address of a route and layer-2 forwarding information corresponding to the destination IP address;

Step 12: the CPU generates route table entries according to the route information, saves a first part of the generated route table entries in the expansion operation element, and saves route table entries other than the first part of the generated route table entries in the switch chip.

The method for expanding a route table capacity of a layer-3 forwarding device provided in the embodiments of the disclosure saves the route information in the expansion operation element and the switch chip, thus greatly improving route table capacity of a network device and reducing an expansion cost of the route table, and the method has great flexibility and expandability, and can greatly improve user satisfaction.

Moreover, the expansion operation element may adopt a programmable logic device such as an FPGA. The layer-2 forwarding information includes a source Media Access Controller (MAC), a destination MAC and a Virtual Local Area Network (VLAN). The route information may be a route learnt by a router/layer-3 switch, or a received route which is manually configured.

In an example embodiment, the step that the CPU generates route table entries according to the route information, saves the first part of the generated route table entries in the expansion operation element and saves route table entries other than the first part of the generated route table entries in the switch chip includes that: the CPU determines whether a route type of the route information is a host route, to obtain a first determination result; and when the first determination result indicates that the route type of the route information is the host route, the CPU generates a first host route table entry according to the route information and saved in the expansion operation element.

In view of an actual application situation, the step that the CPU generates route table entries according to the route information, saves the first part of the generated route table entries in the expansion operation element and saves route table entries other than the first part of the generated route table entries in the switch chip further includes that: after the host route table entries stored in the expansion operation element reaches a first threshold, the CPU generates a second host route table entry according to recently-obtained route information indicating that the route type is the host route, and saves the second host route table entry in the switch chip.

Alternatively, the step that the CPU generates route table entries according to the route information, saves the first part of the generated route table entries in the expansion operation element and saves route table entries other than the first part of the generated route table entries in the switch chip further includes that: when the first determination result indicates that the route type of the route information is not the host route, is the CPU determines whether a prefix type of the route information is consistent with a preset prefix type, to obtain a second determination result; and when the second determination result indicates that the prefix type of the route information is consistent with the preset prefix type, the CPU generates a third route table entry according to the route information and saves the third route table entry in the expansion operation element.

Furthermore, before it is determined whether the prefix type of the route information is consistent with the preset prefix type, the method further includes that: the preset prefix type is acquired. In view of saving resources of the switch chip and reducing the processing efficiency, three preset prefixes are preferentially selected, and a longest (mask/prefix) matching principle is adopted when it is determined whether the prefix type of the route information is consistent with the preset prefix type.

Alternatively, the step that the CPU generates route table entries according to the route information, saves the first part of the generated route table entries in the expansion operation element and saves route table entries other than the first part of the generated route table entries in the switch chip further includes that: when the second determination result indicates that the prefix type of the route information is inconsistent with the preset prefix type, the CPU generates a fourth route table entry according to the route information and saves the fourth route table entry in the switch chip.

In order to enable the switch chip and a port of the expansion operation element to normally work, the method provided in the embodiments of the disclosure further includes that: an attribute configuration condition for a connected port of the switch chip and the expansion operation element and configuration parameters of a packet filtering engine entry are acquired and sent to the switch chip; the attribute of the connected port is configured according to the attribute configuration condition; and the packet filtering engine entry is configured according to the configuration parameter.

Alternatively, the step that the attribute of the connected port is configured according to the attribute configuration condition includes that: the connected port is configured as an XAUI; sending and receiving rates are configured as 10G; and an MAC learning function of the connected port is closed.

In view of that the corresponding processing procedure will be correspondingly changed after a storage position of the route information is changed, the method provided in the embodiments of the disclosure further includes that: the switch chip receives an IP message and directly sends the IP message to the expansion operation element; and then the expansion operation element determines whether the IP message needs to be reported to the CPU for processing, to obtain a third determination result; and when the third determination result indicates that the IP message needs to be reported to the CPU for processing, the expansion operation element sends the IP message, via the switch chip, to the CPU for processing.

Moreover, the process of determining whether the IP message needs to be reported to the CPU for processing may be implemented according to the ralated art.

Alternatively, the method further includes that: when the third determination result indicates that the IP message does not need to be sent to the CPU for processing, the expansion operation element matches the route table entry in the expansion operation element according to a destination IP address of the IP message, modifies a layer-2 message header of the IP message according to layer-2 forwarding information of the successfully-matched route table entry, and then sends the IP message to the switch chip for forwarding.

Alternatively, when the IP message does not match the route table entry in the expansion operation element, the method further includes that: the expansion operation element forwards the IP message to the switch chip, and the switch chip searches the route table entry in the switch chip according to the destination IP address of the IP message for forwarding processing.

In order to solve the above-mentioned technical problems, the embodiments of the disclosure also provide a forwarding device. As shown in Fig. 2, the forwarding device includes a CPU, a switch chip and an expansion operation element, in which
the CPU is arranged to: obtain route information, which includes a destination IP address of a route and layer-2 forwarding information corresponding to the destination IP address; and generate route table entries according to the route information, save a first part of the generated route table entries in the expansion operation element, and save route table entries other than the first part of the generated route table entries in the switch chip.

Moreover, the expansion operation element may adopt a programmable logic device such as an FPGA. The layer-2 forwarding information includes a source MAC, a destination MAC and a VLAN. The route information may be a route learnt by a router/layer-3 switch, or a received route which is manually configured.

Alternatively, the CPU includes: a first determination component, arranged to determine whether a route type of the route information is a host route, to obtain a first determination result; and a first generation and saving component, arranged to generate, when the first determination result indicates that the route type of the route information is the host route, a first host route table entry according to the route information, and save the first host route table entry in the expansion operation element.

In view of an actual application situation, the CPU further includes: a second generation and saving component, arranged to generate, after the host route table entries stored in the expansion operation element reaches a first threshold, a second host route table entry according to recently-obtained route information indicating that the route type is the host route, and save the second host route table entry in the switch chip.

Alternatively, the CPU further includes: a second determination component, arranged to determine, when the first determination result indicates that the route type of the route information is not the host route, whether a prefix type of the route information is consistent with a preset prefix type, to obtain a second determination result; and a third generation and saving component, arranged to generate, when the second determination result indicates that the prefix type of the route information is consistent with the preset prefix type, a third route table entry according to the route information, and save the third route table entry in the expansion operation element.

Alternatively, the CPU is further arranged to acquire the preset prefix type. In view of saving resources of the switch chip and reducing the processing efficiency, three preset prefixes are preferentially selected, and a longest (mask/prefix) matching principle is adopted when it is determined whether the prefix type of the route information is consistent with the preset prefix type.

Alternatively, the CPU further includes: a fourth generation and saving component, arranged to generate, when the second determination result indicates that the prefix type of the route information is inconsistent with the preset prefix type, a fourth route table entry according to the route information, and save the fourth route table entry in the switch chip.

In order to enable the switch chip and a port of the expansion operation element to normally work, the CPU in the forwarding device provided in the embodiments of the disclosure is further arranged to acquire an attribute configuration condition for a connected port of the switch chip and the expansion operation element and configuration parameters of a packet filtering engine entry, and send the attribute configuration condition and the configuration parameters to the switch chip; and the switch chip is arranged to configure the attribute of the connected port according to the attribute configuration condition, and configured the packet filtering engine entry according to the configuration parameter.

Alternatively, the switch chip is arranged to configure the connected port as an XAUI, configure sending and receiving rates as 10G, and close an MAC learning function of the connected port.

In view of that the corresponding processing procedure will be correspondingly changed after a storage position of the route information is changed, the switch chip provided in the embodiments of the disclosure is arranged to receive an IP message, and directly send the IP message to the expansion operation element; and the expansion operation element is arranged to determine whether the IP message needs to be reported to the CPU for processing, to obtain a third determination result, and send, when the third determination result indicates that the IP message needs to be reported to the CPU for processing, the IP message, via the switch chip, to the CPU for processing.

Moreover, the process of determining, by the expansion operation element, whether the IP message needs to be reported to the CPU for processing may be implemented according to the related art.

Alternatively, the expansion operation element is further arranged to match, when the third determination result indicates that the IP message does not need to be sent to the CPU for processing, a route table entry saved in the expansion operation element according to a destination IP address of the IP message, modify a layer-2 message header of the IP message according to layer-2 forwarding information of a successfully-matched route table entry, and then send the IP message to the switch chip for forwarding.

Alternatively, the switch chip is further arranged to receive, when the IP message does not match the route table entry saved in the expansion operation element, the IP message forwarded by the expansion operation element, and search the route table entry saved in the switch chip according to the destination IP address of the IP message for forwarding processing.

Moreover, the implementation embodiments of the method for expanding a route table capacity of a layer-3 forwarding device are applied to the embodiment of the forwarding device, and can achieve the same technical effect.

The present solution will be illustrated below.

The method provided in the embodiments of the disclosure may be applied to an FPGA-based route table capacity expansion system, so the system includes the following components:
a switch chip, an FPGA, a host route table, and a sub-network route table.

Different from existing and other technical solutions, the FPGA-based route table capacity expansion system may configure route entries satisfying some rules to the FPGA, configure other entries to the switch chip, and manage the route entries on the switch chip and the FPGA in a unified manner. Thus, a capacity of a route table may be greatly improved to be many times of that of the switch chip. Therefore, the solution has the obvious advantages of large capacity, low cost, good flexibility and high expansibility.

The method provided in the embodiments of the disclosure includes a control configuration flow and a forwarding flow.

A control configuration flow mainly refers to generation of a route table by means of route protocol interaction or static configuration of a command line, and may be divided into a pre-processing flow and a real-time interaction flow.

The pre-processing flow mainly refers to a series of special configurations on the switch chip and the FPGA in a system initialization process, and includes the following main steps.
First step: Attributes of a connected port of the switch chip and the FPGA are set, mainly including port configuration into XAUI, constraint, rate configuration into 10G, and closing of a port MAC learning function (to prevent an MAC address drifting phenomenon).
Second step: A prefix type needing to be configured on the FPGA is acquired from a configuration file, and the prefix type is configured on the FPGA, thereby completing by writing a prefix table entry on the FPGA.
Third step: A Filter Processor (FP) entry is configured, and all layer-3 messages entering the switch chip are reoriented to the FPGA.

Alternatively, fourth step: the connected port of the switch chip and the FPGA is arranged to be aggregated, that is, multiple FPGA ports are aggregated, and the network forwarding capacity may be improved by using an appropriate load sharing algorithm.

The real-time interaction flow is mainly intended to process issued route configurations received after command line or protocol interaction, and includes the following main steps.
First step: All IPV4 and IPV6 host routes are configured on the FPGA, and after FPGA table entries are fully configured, a host route table of the switch chip is written.
   It is necessary to write information such as a destination IP and a corresponding source MAC, destination MAC and VLAN into a route table corresponding to the FPGA.
Second step: All IPV4 sub-network routes are configured on the switch chip.
Third step: Three IPV6 sub-network segments (i.e., prefixes are 64, 56 and 48) needing to be configured on the FPGA are specified, and prefix information is issued to the FPGA.
Fourth step: Sub-network routes meeting the requirements of the third step are configured on the FPGA, and other IPV6 sub-network routes are configured on the switch chip according to a longest (mask) matching principle during matching. Likewise, it is necessary to write information such as a destination IP and a corresponding source MAC, destination MAC and VLAN into a route table corresponding to the FPGA.

Alternatively, five route storage tables are adopted on the FPGA, one of the route storage tables is used for storing an IPV4 host route, and other four route storage tables are used for storing an IPV6 host route and sub-network routes of three different prefixes. The four route tables correspond to different prefixes respectively. Each table includes 8K buckets, and each bucket may contain four collision entries (referring to Hash collision entries for storing route entries) and can receive 32K route entries. The route tables adopt a double-Hash algorithm, and index and collision entries of the buckets in the route tables are calculated by means of two Hash tables, so that the utilization rate of the route tables may be greatly improved. Thus, sub-network route table entries are expanded, and the problem of table lookup efficiency is fully considered, so great flexibility is achieved in usage in the existing network.

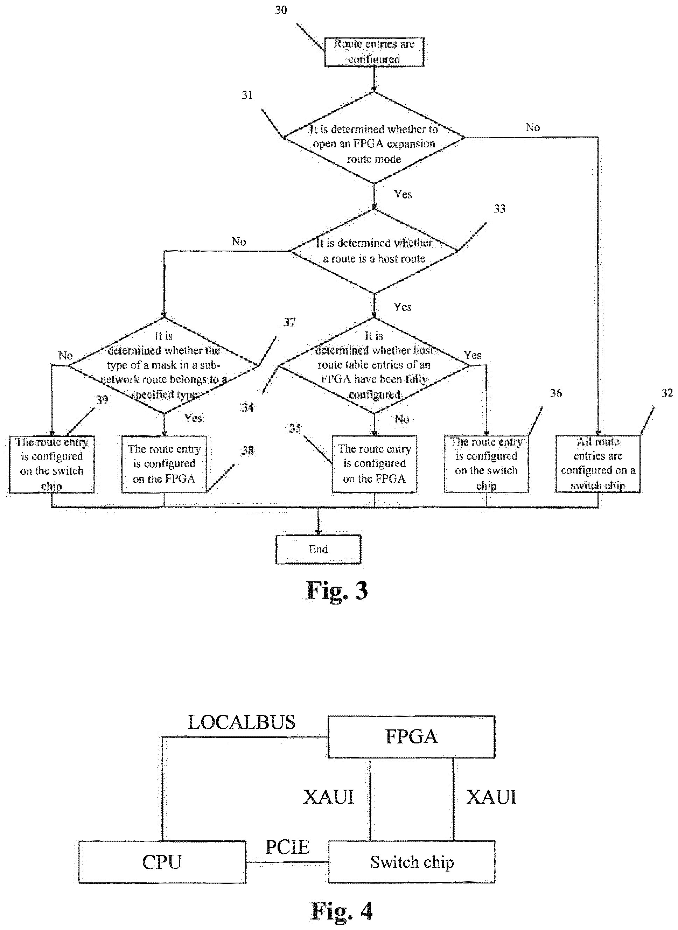

In practical application, as shown in Fig. 3, the specific real-time interaction flow includes the following steps.
Step 30: Route entries are configured.
Step 31: It is determined whether to open an FPGA expansion route mode.
Step 32: When the FPGA expansion route mode is not opened, all route entries are configured on a switch chip according to an original processing mode.
Step 33: When the FPGA expansion route mode is opened, it is necessary to determine whether the route is a host route (i.e., determine whether the route is a host route or a sub-network route).
Step 34: If the route is the host route, it is necessary to further determine whether host route table entries of an FPGA have been fully configured.
Step 35: If the host route table entries of the FPGA are not fully configured, the route entry is configured on the FPGA.
Step 36: If the host route table entries of the FPGA have been fully configured, the route entry is configured on the switch chip.
Step 37: If the route is the sub-network route, it is necessary to further determine the type of a mask.
Step 38: If the mask of the sub-network route belongs to a specified type, the route entry is configured on the FPGA.
Step 39: If the mask of the sub-network route does not belong to the specified type, the route entry is configured on the switch chip.

The forwarding flow mainly processes transfer of an IP message to a correct destination address according to a route forwarding table, and mainly contains the following steps.
First step: All IP messages entering the switch chip are sent to the FPGA preferentially for route table matching, and a route entry on the FPGA saves information needed for route forwarding, including a destination IP, a mask, a source MAC, a destination MAC and a VLAN.
Second step: The FPGA determines the types of the IP messages, the FPGA does not forward a protocol message needing to be sent to a CPU for processing to the switch chip, and the switch chip performs FP (filter processor-packet filtering engine of switch chip) packet carrying to the CPU at an entry of a connected port of the switch chip and the FPGA.
Third step: If the IP message is successfully matched, message modification (including replacement of the source MAC, destination MAC and VLAN) is performed on the FPGA, and the corrected IP message is sent back to the switch chip to continuously perform layer-2 forwarding (ARP learning stage, the switch chip has saved corresponding information of the MAC and the port).
Fourth step: If the IP message is unsuccessfully matched, the FPGA does not perform any message modification, and sends the original IP message to the switch chip (table entry matching) to continuously perform the layer-3 forwarding flow.

After receiving the IP message forwarded by the FPGA, the switch chip determines whether the layer-2 forwarding flow or the layer-3 forwarding flow is performed by determining whether the destination MAC in the IP message is consistent with a local MAC.

It is known to all that in the related art, it is supposed that three IP messages (message 1, message 2 and message 3) are contained and three tables, namely an L2 MAC table, an L3 host route table and an L3 sub-network route table, are contained in the switch chip. All route entries are configured on the switch chip. These three IP messages are subjected to layer-3 forwarding (modification of a source MAC, a destination MAC and a VLAN of a message on the switch chip, and sending of the modified message to a correct port) inside the switch chip.

The switch chip and the FPGA in the forwarding device (adopting the FPGA) provided in the embodiments of the disclosure are connected via two XAUI ports. The switch chip and the CPU are connected via a PCIE, and the FPGA and the CPU are connected via a LOCAL BUS, as shown in Fig. 4. The forwarding device adopting the FPGA may send all messages entering the switch chip to the FPGA for route table matching. If the route table is matched successfully, message modification is performed on the FPGA, and the modified messages are sent to the switch chip to continuously perform layer-2 forwarding (ARP learning stage, the switch chip has saved corresponding information of the MAC and the port (an MAC table saves the information of the MAC and the port, and if the destination MAC of the message is consistent with a certain MAC in the MAC table, the message will be forwarded to a port corresponding to the MAC)). If the route table is failed to match, the FPGA does not perform any message modification, and sends the original IP message to the switch chip to continuously perform the layer-3 forwarding flow.

The solution provided in the embodiments of the disclosure may greatly improve route table capacity of a network device and reduce the expansion cost of the route table, has great flexibility and expandability, and can greatly improve user satisfaction.

The above is only implementation modes of the disclosure. It should be pointed out that those of ordinary skill in the technical art may also make some improvements and modifications without departing from the principle of the disclosure. These improvements and modifications should fall within the disclosure.

### Industrial Applicability

As above, by means of the above-mentioned embodiments and example implementation modes, the above-mentioned method for expanding a route table capacity of a layer-3 forwarding device saves the route information in the expansion operation element and the switch chip, thus greatly improving route table capacity of a network device and reducing an expansion cost of the route table, and the method has great flexibility and expandability, and can greatly improve user satisfaction.

## Claims

1. A method for expanding a route table capacity of a layer-3 forwarding device, the layer-3 forwarding device comprising a Central Processing Unit, CPU, a switch chip and an expansion operation element, the method comprising:
obtaining, by the CPU, route information, which comprises a destination Internet Protocol, IP, address of a route and layer-2 forwarding information corresponding to the destination IP address (11); and
generating, by the CPU, route table entries according to the route information, saving, by the CPU, a first part of the generated route table entries in the expansion operation element, and saving, by the CPU, route table entries other than the first part of the generated route table entries in the switch chip (12);
**characterized in that** the switch chip and the expansion operation element are connected via a port which is configured as an XAUI.

2. The method as claimed in claim 1, wherein generating, by the CPU, the route table entries according to the route information, saving, by the CPU, the first part of the generated route table entries in the expansion operation element and saving, by the CPU, route table entries other than the first part of the generated route table entries in the switch chip comprises:
determining, by the CPU, whether a route type of the route information is a host route, to obtain a first determination result; and
when the first determination result indicates that the route type of the route information is the host route, generating, by the CPU, a first host route table entry according to the route information, and saving, by the CPU, the first host route table entry in the expansion operation element.

3. The method as claimed in claim 2, wherein generating, by the CPU, the route table entries according to the route information, saving, by the CPU, the first part of the generated route table entries in the expansion operation element and saving, by the CPU, route table entries other than the first part of the generated route table entries in the switch chip further comprises:
after the first host route table entry stored in the expansion operation element reaches a first threshold, generating, by the CPU, a second host route table entry according to recently-obtained route information indicating that the route type is the host route, and saving, by the CPU, the second host route table entry in the switch chip.

4. The method as claimed in claim 2, wherein generating, by the CPU, route table entries according to the route information, saving, by the CPU, a first part of the generated route table entries in the expansion operation element and saving, by the CPU, route table entries other than the first part of the generated route table entries in the switch chip further comprises:
when the first determination result indicates that the route type of the route information is not the host route, determining, by the CPU, whether a prefix type of the route information is consistent with a preset prefix type, to obtain a second determination result; and
when the second determination result indicates that the prefix type of the route information is consistent with the preset prefix type, generating, by the CPU, a third route table entry according to the route information, and saving, by the CPU, the third route table entry in the expansion operation element.

5. The method as claimed in claim 4, wherein generating, by the CPU, route table entries according to the route information, saving, by the CPU, a first part of the generated route table entries in the expansion operation element and saving, by the CPU, route table entries other than the first part of the generated route table entries in the switch chip further comprises:
when the second determination result indicates that the prefix type of the route information is inconsistent with the preset prefix type, generating, by the CPU, a fourth route table entry according to the route information, and saving, by the CPU, the fourth route table entry in the switch chip.

6. The method as claimed in claim 1, further comprising:
receiving, by the switch chip, an IP message;
sending, by the switch chip, the IP message to the expansion operation element;
determining, by the expansion operation element, whether the IP message needs to be reported to the CPU for processing, to obtain a third determination result; and
when the third determination result indicates that the IP message needs to be reported to the CPU for processing, sending, by the expansion operation element, the IP message, via the switch chip, to the CPU for processing.

7. The method as claimed in claim 6, further comprising:
when the third determination result indicates that the IP message does not need to be sent to the CPU for processing, matching, by the expansion operation element, a route table entry in the expansion operation element according to a destination IP address of the IP message, modifying a layer-2 message header of the IP message according to layer-2 forwarding information of a successfully-matched route table entry, and then sending the IP message to the switch chip for forwarding.

8. The method as claimed in claim 7, wherein when the IP message does not match the route table entry in the expansion operation element, the method further comprises:
forwarding, by the expansion operation element, the IP message to the switch chip, and searching, by the switch chip, the route table entry in the switch chip according to the destination IP address of the IP message for forwarding processing.

9. A forwarding device, comprising a Central Processing Unit, CPU, a switch chip and an expansion operation element, wherein
the CPU is arranged to: obtain route information, which comprises a destination Internet Protocol, IP, address of a route and layer-2 forwarding information corresponding to the destination IP address; and generate route table entries according to the route information, save a first part of the generated route table entries in the expansion operation element, and save route table entries other than the first part of the generated route table entries in the switch chip;
**characterized in that** the switch chip and the expansion operation element are connected via a port which is configured as an XAUI.

10. The forwarding device as claimed in claim 9, wherein the CPU comprises:
a first determination component, arranged to determine whether a route type of the route information is a host route, to obtain a first determination result; and
a first generation and saving component, arranged to generate, when the first determination result indicates that the route type of the route information is the host route, a first host route table entry according to the route information, and save the first host route table entry in the expansion operation element.

11. The forwarding device as claimed in claim 10, wherein the CPU further comprises: a second generation and saving component, arranged to generate, after the first host route table entry stored in the expansion operation element reaches a first threshold, a second host route table entry according to recently-obtained route information indicating that the route type is the host route, and save the second host route table entry in the switch chip.

12. The forwarding device as claimed in claim 10, wherein the CPU comprises:
a second determination component, arranged to determine, when the first determination result indicates that the route type of the route information is not the host route, whether a prefix type of the route information is consistent with a preset prefix type, to obtain a second determination result; and
a third generation and saving component, arranged to generate, when the second determination result indicates that the prefix type of the route information is consistent with the preset prefix type, a third route table entry according to the route information, and save the third route table entry in the expansion operation element.

13. The forwarding device as claimed in claim 12, wherein the CPU comprises:
a fourth generation and saving component, arranged to generate, when the second determination result indicates that the prefix type of the route information is inconsistent with the preset prefix type, a fourth route table entry according to the route information, and save the fourth route table entry in the switch chip.

14. The forwarding device as claimed in claim 9, wherein
the switch chip is arranged to receive an IP message, and send the IP message to the expansion operation element; and
the expansion operation element is arranged to determine whether the IP message needs to be reported to the CPU for processing, to obtain a third determination result, and send, when the third determination result indicates that the IP message needs to be reported to the CPU for processing, the IP message, via the switch chip, to the CPU for processing.

15. The forwarding device as claimed in claim 14, wherein
the expansion operation element is arranged to match, when the third determination result indicates that the IP message does not need to be sent to the CPU for processing, a route table entry saved in the expansion operation element according to a destination IP address of the IP message, modify a layer-2 message header of the IP message according to layer-2 forwarding information of a successfully-matched route table entry, and then send the IP message to the switch chip for forwarding.

16. The forwarding device as claimed in claim 15, wherein
the switch chip is further arranged to receive, when the IP message does not match the route table entry saved in the expansion operation element, the IP message forwarded by the expansion operation element, and search the route table entry saved in the switch chip according to the destination IP address of the IP message for forwarding processing.

## Patentansprüche

1. Verfahren zum Erweitern einer Routentabellenkapazität einer Schicht-3-Weiterleitungsvorrichtung, wobei die Schicht-3-Weiterleitungsvorrichtung eine zentrale Verarbeitungseinheit, CPU, einen Schalterchip und ein Erweiterungsoperationselement umfasst, wobei das Verfahren umfasst:
Erhalten, durch die CPU, von Routeninformationen, die eine Internet Protocol-, IP, Zieladresse einer Route und Schicht-2-Weiterleitungsinformationen umfassen, welche der IP-Zieladresse (11) entsprechen; und
Erzeugen, durch die CPU, von Routentabelleneinträgen gemäß den Routeninformationen, Speichern, durch die CPU, eines ersten Teils der erzeugten Routentabelleneinträge im Erweiterungsoperationselement, und Speichern, durch die CPU, von anderen Routentabelleneinträgen als dem ersten Teil der erzeugten Routentabelleneinträge im Schalterchip (12);
**dadurch gekennzeichnet, dass** der Schalterchip und das Erweiterungsoperationselement über einen Port verbunden sind, der als eine XAUI konfiguriert ist.

2. Verfahren nach Anspruch 1, wobei das Erzeugen, durch die CPU, der Routentabelleneinträge gemäß den Routeninformationen, das Speichern, durch die CPU, des ersten Teils der erzeugten Routentabelleneinträge im Erweiterungsoperationselement, und das Speichern, durch die CPU, von anderen Routentabelleneinträgen als dem ersten Teil der erzeugten Routentabelleneinträge im Schalterchip umfasst:
Bestimmen, durch die CPU, ob ein Routentyp der Routeninformationen eine Host-Route ist, um ein erstes Bestimmungsergebnis zu erhalten; und
wenn das erste Bestimmungsergebnis anzeigt, dass der Routentyp der Routeninformationen die Host-Route ist, Erzeugen, durch die CPU, eines ersten Host-Routentabelleneintrags gemäß den Routeninformationen, und Speichern, durch die CPU, des ersten Host-Routentabelleneintrags im Erweiterungsoperationselement.

3. Verfahren nach Anspruch 2, wobei das Erzeugen, durch die CPU, der Routentabelleneinträge gemäß den Routeninformationen, das Speichern, durch die CPU, des ersten Teils der erzeugten Routentabelleneinträge im Erweiterungsoperationselement, und das Speichern, durch die CPU, von anderen Routentabelleneinträgen als dem ersten Teil der erzeugten Routentabelleneinträge im Schalterchip weiter umfasst:
nachdem der erste Host-Routentabelleneintrag, der im Erweiterungsoperationselement gespeichert ist, eine erste Schwelle erreicht, Erzeugen, durch die CPU, eines zweiten Host-Routentabelleneintrags gemäß kürzlich erhaltenen Routeninformationen, die anzeigen, dass der Routentyp die Host-Route ist, und Speichern, durch die CPU, des zweiten Host-Routentabelleneintrags im Schalterchip.

4. Verfahren nach Anspruch 2, wobei das Erzeugen, durch die CPU, von Routentabelleneinträgen gemäß den Routeninformationen, das Speichern, durch die CPU, eines ersten Teils der erzeugten Routentabelleneinträge im Erweiterungsoperationselement, und das Speichern, durch die CPU, von anderen Routentabelleneinträgen als dem ersten Teil der erzeugten Routentabelleneinträge im Schalterchip weiter umfasst:
wenn das erste Bestimmungsergebnis anzeigt, dass der Routentyp der Routeninformationen nicht die Host-Route ist, Bestimmen, durch die CPU, ob ein Präfixtyp der Routeninformationen mit einem voreingestellten Präfixtyp übereinstimmt, um ein zweites Bestimmungsergebnis zu erhalten; und
wenn das zweite Bestimmungsergebnis anzeigt, dass der Präfixtyp der Routeninformationen mit dem voreingestellten Präfixtyp übereinstimmt, Erzeugen, durch die CPU, eines dritten Routentabelleneintrags gemäß den Routeninformationen, und Speichern, durch die CPU, des dritten Routentabelleneintrags im Erweiterungsoperationselement.

5. Verfahren nach Anspruch 4, wobei das Erzeugen, durch die CPU, von Routentabelleneinträgen gemäß den Routeninformationen, das Speichern, durch die CPU, eines ersten Teils der erzeugten Routentabelleneinträge im Erweiterungsoperationselement, und das Speichern, durch die CPU, von anderen Routentabelleneinträgen als dem ersten Teil der erzeugten Routentabelleneinträge im Schalterchip weiter umfasst:
wenn das zweite Bestimmungsergebnis anzeigt, dass der Präfixtyp der Routeninformationen nicht mit dem voreingestellten Präfixtyp übereinstimmt, Erzeugen, durch die CPU, eines vierten Routentabelleneintrags gemäß den Routeninformationen, und Speichern, durch die CPU, des vierten Routentabelleneintrags im Schalterchip.

6. Verfahren nach Anspruch 1, weiter umfassend:
Empfangen einer IP-Nachricht durch den Schalterchip;
Senden der IP-Nachricht durch den Schalterchip an das Erweiterungsoperationselement;
Bestimmen, durch das Erweiterungsoperationselement, ob die IP-Nachricht der CPU zur Verarbeitung berichtet werden muss, um ein drittes Bestimmungsergebnis zu erhalten; und
wenn das dritte Bestimmungsergebnis anzeigt, dass die IP-Nachricht der CPU zur Verarbeitung berichtet werden muss, Senden der IP-Nachricht durch das Erweiterungsoperationselement über den Schalterchip zur Verarbeitung an die CPU.

7. Verfahren nach Anspruch 6, weiter umfassend:
wenn das dritte Bestimmungsergebnis anzeigt, dass die IP-Nachricht nicht zur Verarbeitung an die CPU gesendet werden muss, Anpassen, durch das Erweiterungsoperationselement, eines Routentabelleneintrags im Erweiterungsoperationselement gemäß einer IP-Zieladresse der IP-Nachricht, Modifizieren eines Schicht-2-Nachrichtenkopfes der IP-Nachricht gemäß Schicht-2-Weiterleitungsinformationen eines erfolgreich angepassten Routentabelleneintrags, und dann Senden der IP-Nachricht zur Weiterleitung an den Schalterchip.

8. Verfahren nach Anspruch 7, wobei wenn die IP-Nachricht nicht zum Routentabelleneintrag im Erweiterungsoperationselement passt, das Verfahren weiter umfasst:
Weiterleiten der IP-Nachricht durch das Erweiterungsoperationselement an den Schalterchip, und Suchen, durch den Schalterchip, des Routentabelleneintrags im Schalterchip gemäß der IP-Zieladresse der IP-Nachricht zur Weiterleitungsverarbeitung.

9. Weiterleitungsvorrichtung, die eine zentrale Verarbeitungseinheit, CPU, einen Schalterchip und ein Erweiterungsoperationselement umfasst, wobei
die CPU dazu eingerichtet ist: Routeninformationen zu erhalten, die eine Internet Protocol-, IP, Zieladresse einer Route und Schicht-2-Weiterleitungsinformationen umfassen, welche der IP-Zieladresse entsprechen; und gemäß den Routeninformationen Routentabelleneinträge zu erzeugen, einen ersten Teil der erzeugten Routentabelleneinträge im Erweiterungsoperationselement zu speichern, und andere Routentabelleneinträge als den ersten Teil der erzeugten Routentabelleneinträge im Schalterchip zu speichern;
**dadurch gekennzeichnet, dass** der Schalterchip und das Erweiterungsoperationselement über einen Port verbunden sind, der als eine XAUI konfiguriert ist.

10. Weiterleitungsvorrichtung nach Anspruch 9, wobei die CPU umfasst:
eine erste Bestimmungskomponente, die dazu eingerichtet ist, zu bestimmen, ob ein Routentyp der Routeninformationen eine Host-Route ist, um ein erstes Bestimmungsergebnis zu erhalten; und
eine erste Erzeugungs- und Speicherungskomponente, die dazu eingerichtet ist, wenn das erste Bestimmungsergebnis anzeigt, dass der Routentyp der Routeninformationen die Host-Route ist, einen ersten Host-Routentabelleneintrag gemäß den Routeninformationen zu erzeugen und den ersten Host-Routentabelleneintrag im Erweiterungsoperationselement zu speichern.

11. Weiterleitungsvorrichtung nach Anspruch 10, wobei die CPU weiter umfasst: eine zweite Erzeugungs- und Speicherungskomponente, die dazu eingerichtet ist, nachdem der erste Host-Routentabelleneintrag, der im Erweiterungsoperationselement gespeichert ist, eine erste Schwelle erreicht, einen zweiten Host-Routentabelleneintrag gemäß kürzlich erhaltenen Routeninformationen, die anzeigen, dass der Routentyp die Host-Route ist, zu erzeugen und den zweiten Host-Routentabelleneintrag im Schalterchip zu speichern.

12. Weiterleitungsvorrichtung nach Anspruch 10, wobei die CPU umfasst:
eine zweite Bestimmungskomponente, die dazu eingerichtet ist, wenn das erste Bestimmungsergebnis anzeigt, dass der Routentyp der Routeninformationen nicht die Host-Route ist, zu bestimmen, ob ein Präfixtyp der Routeninformationen mit einem voreingestellten Präfixtyp übereinstimmt, um ein zweites Bestimmungsergebnis zu erhalten; und
eine dritte Erzeugungs- und Speicherungskomponente, die dazu eingerichtet ist, wenn das zweite Bestimmungsergebnis anzeigt, dass der Präfixtyp der Routeninformationen mit dem voreingestellten Präfixtyp übereinstimmt, einen dritten Routentabelleneintrag gemäß den Routeninformationen zu erzeugen und den dritten Routentabelleneintrag im Erweiterungsoperationselement zu speichern.

13. Weiterleitungsvorrichtung nach Anspruch 12, wobei die CPU umfasst:
eine vierte Erzeugungs- und Speicherungskomponente, die dazu eingerichtet ist, wenn das zweite Bestimmungsergebnis anzeigt, dass der Präfixtyp der Routeninformationen nicht mit dem voreingestellten Präfixtyp übereinstimmt, einen vierten Routentabelleneintrag gemäß den Routeninformationen zu erzeugen und den vierten Routentabelleneintrag im Schalterchip zu speichern.

14. Weiterleitungsvorrichtung nach Anspruch 9, wobei
der Schalterchip dazu eingerichtet ist, eine IP-Nachricht zu empfangen und die IP-Nachricht an das Erweiterungsoperationselement zu senden; und
das Erweiterungsoperationselement dazu eingerichtet ist, zu bestimmen, ob die IP-Nachricht der CPU zur Verarbeitung berichtet werden muss, um ein drittes Bestimmungsergebnis zu erhalten, und wenn das dritte Bestimmungsergebnis anzeigt, dass die IP-Nachricht der CPU zur Verarbeitung berichtet werden muss, die IP-Nachricht über den Schalterchip zur Verarbeitung an die CPU zu senden.

15. Weiterleitungsvorrichtung nach Anspruch 14, wobei
das Erweiterungsoperationselement dazu eingerichtet ist, wenn das dritte Bestimmungsergebnis anzeigt, dass die IP-Nachricht nicht zur Verarbeitung an die CPU gesendet werden muss, einen Routentabelleneintrag, der im Erweiterungsoperationselement gespeichert ist, gemäß einer IP-Zieladresse der IP-Nachricht anzupassen, einen Schicht-2-Nachrichtenkopf der IP-Nachricht gemäß Schicht-2-Weiterleitungsinformationen eines erfolgreich angepassten Routentabelleneintrags zu modifizieren, und dann die IP-Nachricht zur Weiterleitung an den Schalterchip zu senden.

16. Weiterleitungsvorrichtung nach Anspruch 15, wobei
der Schalterchip weiter dazu eingerichtet ist, wenn die IP-Nachricht nicht zu dem Routentabelleneintrag passt, der im Erweiterungsoperationselement gespeichert ist, die vom Erweiterungsoperationselement weitergeleitete IP-Nachricht zu empfangen und den Routentabelleneintrag, der im Schalterchip gespeichert ist, zur Weiterleitungsverarbeitung gemäß der IP-Zieladresse der IP-Nachricht zu durchsuchen.

## Revendications

1. Procédé d'extension d'une capacité de table de routage d'un dispositif de transfert de couche 3, le dispositif de transfert de couche 3 comprenant une unité centrale de traitement, CPU, une puce de commutateur et un élément d'opération d'extension, le procédé comprenant :
l'obtention, par la CPU, d'informations de routage, qui comprennent une adresse de protocole Internet, IP, de destination d'un routage et des informations de transfert de couche 2 correspondant à l'adresse IP de destination (11) ; et
la génération, par la CPU, d'entrées de table de routage selon les informations de routage, la sauvegarde, par la CPU, d'une première partie des entrées de table de routage générées dans l'élément d'opération d'extension, et la sauvegarde, par la CPU, d'entrées de table de routage autres que la première partie des entrées de table de routage générées dans la puce de commutateur (12) ;
**caractérisé en ce que** la puce de commutateur et l'élément d'opération d'extension sont connectés via un port qui est configuré en tant que XAUI.

2. Procédé selon la revendication 1, dans lequel la génération, par la CPU, des entrées de table de routage selon les informations de routage, la sauvegarde, par la CPU, de la première partie des entrées de table de routage générées dans l'élément d'opération d'extension et la sauvegarde, par la CPU, d'entrées de table de routage autres que la première partie des entrées de table de routage générées dans la puce de commutateur comprennent :
le fait de déterminer, par la CPU, si un type de routage des informations de routage est un routage hôte, pour obtenir un premier résultat de détermination ; et
lorsque le premier résultat de détermination indique que le type de routage des informations de routage est le routage hôte, la génération, par la CPU, d'une première entrée de table de routage hôte selon les informations de routage, et la sauvegarde, par la CPU, de la première entrée de table de routage hôte dans l'élément d'opération d'extension.

3. Procédé selon la revendication 2, dans lequel la génération, par la CPU, des entrées de table de routage selon les informations de routage, la sauvegarde, par la CPU, de la première partie des entrées de table de routage générées dans l'élément d'opération d'extension et la sauvegarde, par la CPU, d'entrées de table de routage autres que la première partie des entrées de table de routage générées dans la puce de commutateur comprennent en outre :
après que la première entrée de table de routage hôte stockée dans l'élément d'opération d'extension atteint un premier seuil, la génération, par la CPU, d'une deuxième entrée de table de routage hôte selon des informations de routage récemment obtenues indiquant que le type de routage est le routage hôte, et la sauvegarde, par la CPU, de la deuxième entrée de table de routage hôte dans la puce de commutateur.

4. Procédé selon la revendication 2, dans lequel la génération, par la CPU, d'entrées de table de routage selon les informations de routage, la sauvegarde, par la CPU, d'une première partie des entrées de table de routage générées dans l'élément d'opération d'extension et la sauvegarde, par la CPU, d'entrées de table de routage autres que la première partie des entrées de table de routage générées dans la puce de commutateur comprennent en outre :
lorsque le premier résultat de détermination indique que le type de routage des informations de routage n'est pas le routage hôte, le fait de déterminer, par la CPU, si un type de préfixe des informations de routage est cohérent avec un type de préfixe prédéfini, pour obtenir un deuxième résultat de détermination ; et
lorsque le deuxième résultat de détermination indique que le type de préfixe des informations de routage est cohérent avec le type de préfixe prédéfini, la génération, par la CPU, d'une troisième entrée de table de routage selon les informations de routage, et la sauvegarde, par la CPU, de la troisième entrée de table de routage dans l'élément d'opération d'extension.

5. Procédé selon la revendication 4, dans lequel la génération, par la CPU, d'entrées de table de routage selon les informations de routage, la sauvegarde, par la CPU, d'une première partie des entrées de table de routage générées dans l'élément d'opération d'extension et la sauvegarde, par la CPU, d'entrées de table de routage autres que la première partie des entrées de table de routage générées dans la puce de commutateur comprennent en outre :
lorsque le deuxième résultat de détermination indique que le type de préfixe des informations de routage est incohérent avec le type de préfixe prédéfini, la génération, par la CPU, d'une quatrième entrée de table de routage selon les informations de routage, et la sauvegarde, par la CPU, de la quatrième entrée de table de routage dans la puce de commutateur.

6. Procédé selon la revendication 1, comprenant en outre :
la réception, par la puce de commutateur, d'un message IP ;
l'envoi, par la puce de commutateur, du message IP à l'élément d'opération d'extension ;
le fait de déterminer, par l'élément d'opération d'extension, si le message IP doit être rapporté à la CPU aux fins de traitement, pour obtenir un troisième résultat de détermination ; et
lorsque le troisième résultat de détermination indique que le message IP doit être rapporté à la CPU aux fins de traitement, l'envoi, par l'élément d'opération d'extension, du message IP, via la puce de commutateur, à la CPU aux fins de traitement.

7. Procédé selon la revendication 6, comprenant en outre :
lorsque le troisième résultat de détermination indique que le message IP ne doit pas être envoyé à la CPU aux fins de traitement, l'appariement, par l'élément d'opération d'extension, d'une entrée de table de routage dans l'élément d'opération d'extension selon une adresse IP de destination du message IP, la modification d'un en-tête de message de couche 2 du message IP selon des informations de transfert de couche 2 d'une entrée de table de routage appariée avec succès et ensuite l'envoi du message IP à la puce de commutateur aux fins de transfert.

8. Procédé selon la revendication 7, dans lequel lorsque le message IP n'est pas apparié à l'entrée de table de routage dans l'élément d'opération d'extension, le procédé comprend en outre :
le transfert, par l'élément d'opération d'extension, du message IP à la puce de commutateur, et la recherche, par la puce de commutateur, de l'entrée de table de routage dans la puce de commutateur selon l'adresse IP de destination du message IP pour transférer le traitement.

9. Dispositif de transfert, comprenant une unité centrale de traitement, CPU, une puce de commutateur et un élément d'opération d'extension, dans lequel
la CPU est agencée pour : obtenir des informations de routage, qui comprennent une adresse de protocole Internet, IP, de destination d'un routage et des informations de transfert de couche 2 correspondant à l'adresse IP de destination ; et générer des entrées de table de routage selon les informations de routage, sauvegarder une première partie des entrées de table de routage générées dans l'élément d'opération d'extension, et sauvegarder des entrées de table de routage autres que la première partie des entrées de table de routage générées dans la puce de commutateur ;
**caractérisé en ce que** la puce de commutateur et l'élément d'opération d'extension sont connectés via un port qui est configuré en tant que XAUI.

10. Dispositif de transfert selon la revendication 9, dans lequel la CPU comprend :
un premier composant de détermination, agencé pour déterminer si un type de routage des informations de routage est un routage hôte, pour obtenir un premier résultat de détermination ; et
un premier composant de génération et de sauvegarde, agencé pour générer, lorsque le premier résultat de détermination indique que le type de routage des informations de routage est le routage hôte, une première entrée de table de routage hôte selon les informations de routage, et sauvegarder la première entrée de table de routage hôte dans l'élément d'opération d'extension.

11. Dispositif de transfert selon la revendication 10, dans lequel la CPU comprend en outre : un deuxième composant de génération et de sauvegarde, agencé pour générer, après que la première entrée de table de routage hôte stockée dans l'élément d'opération d'extension atteint un premier seuil, une deuxième entrée de table de routage hôte selon des informations de routage récemment obtenues indiquant que le type de routage est le routage hôte, et sauvegarder la deuxième entrée de table de routage hôte dans la puce de commutateur.

12. Dispositif de transfert selon la revendication 10, dans lequel la CPU comprend :
un second composant de détermination, agencé pour déterminer, lorsque le premier résultat de détermination indique que le type de routage des informations de routage n'est pas le routage hôte, si un type de préfixe des informations de routage est cohérent avec un type de préfixe prédéfini, pour obtenir un deuxième résultat de détermination ; et
un troisième composant de génération et de sauvegarde, agencé pour générer, lorsque le deuxième résultat de détermination indique que le type de préfixe des informations de routage est cohérent avec le type de préfixe prédéfini, une troisième entrée de table de routage selon les informations de routage, et sauvegarder la troisième entrée de table de routage dans l'élément d'opération d'extension.

13. Dispositif de transfert selon la revendication 12, dans lequel la CPU comprend :
un quatrième composant de génération et de sauvegarde, agencé pour générer, lorsque le deuxième résultat de détermination indique que le type de préfixe des informations de routage est incohérent avec le type de préfixe prédéfini, une quatrième entrée de table de routage selon les informations de routage, et sauvegarder la quatrième entrée de table de routage dans la puce de commutateur.

14. Dispositif de transfert selon la revendication 9, dans lequel
la puce de commutateur est agencée pour recevoir un message IP, et envoyer le message IP à l'élément d'opération d'extension ; et
l'élément d'opération d'extension est agencé pour déterminer si le message IP doit être rapporté à la CPU aux fins de traitement, pour obtenir un troisième résultat de détermination,
et envoyer, lorsque le troisième résultat de détermination indique que le message IP doit être rapporté à la CPU aux fins de traitement, le message IP, via la puce de commutateur, à la CPU aux fins de traitement.

15. Dispositif de transfert selon la revendication 14, dans lequel
l'élément d'opération d'extension est agencé pour apparier, lorsque le troisième résultat de détermination indique que le message IP ne doit pas être envoyé à la CPU aux fins de traitement, une entrée de table de routage sauvegardée dans l'élément d'opération d'extension selon une adresse IP de destination du message IP, modifier un en-tête de message de couche 2 du message IP selon des informations de transfert de couche 2 d'une entrée de table de routage appariée avec succès, et ensuite envoyer le message IP à la puce de commutateur aux fins de transfert.

16. Dispositif de transfert selon la revendication 15, dans lequel
la puce de commutateur est en outre agencée pour recevoir, lorsque le message IP n'apparie pas l'entrée de table de routage sauvegardée dans l'élément d'opération d'extension, le message IP transféré par l'élément d'opération d'extension, et rechercher l'entrée de table de routage sauvegardée dans la puce de commutateur selon l'adresse IP de destination du message IP aux fins de transfert du traitement.
